# EUROPÄISCHE PATENTSCHRIFT

(11) **EP 1 876 045 B1**
(45) Veröffentlichungstag und Bekanntmachung des Hinweises auf die Patenterteilung: **02.12.2009**
(21) Anmeldenummer: 07013145.3
(22) Anmeldetag: 05.07.2007
(51) Int. Cl.: B60H 1/00

(54) **Klimaanlage in einem Land-, Wasser- oder Luftfahrzeug**
Air conditioning system in a land, water or air craft
Climatisation dans un véhicule terrestre, aquatique ou aérien

(30) Priorität: 06.07.2006 DE 202006010428 U
(43) Veröffentlichungstag der Anmeldung: 09.01.2008
(73) Patentinhaber: Hymer-Leichtmetallbau GmbH & Co. KG, 88239 Wangen (DE); AURORA Konrad G. Schulz GmbH & Co. KG, 69427 Mudau (DE)
(72) Erfinder: Boetzelen, Rudolph, 88239 Wangen (DE); Schweiffele, Reinhold, 88471 Laupheim (DE)
(74) Vertreter: Riebling, Peter

(56) Entgegenhaltungen:
- DE-A1- 3 036 546
- DE-A1- 19 625 925
- DE-U- 7 308 783

## Beschreibung

Die Erfindung betrifft eine Klimaanlage in einem Land-, Wasser- oder Luftfahrzeug, das insbesondere zur Beförderung einer größeren Anzahl von Passagieren geeignet ist, nach dem Oberbegriff des unabhängigen Patentanspruches 1.

Die Klimaanlage weist mindestens einen Wärme- und/oder Kälteerzeuger mit Wärmetauschern und mindestens einen Luftkanal für die Führung der Kühl- und/oder Heizluft und Klimatisierung bzw. Temperierung des Innenraums des Fahrzeugs auf.

Der einfacheren Beschreibung wegen wird im Folgenden von einem Landfahrzeug, insbesondere einem Omnibus ausgegangen. Die Erfindung ist jedoch nicht auf eine Klimaanlage in einem Omnibus beschränkt. Alle nachfolgend beschriebenen Merkmale sind deshalb auch auf etwa gleichartig aufgebaute Luft- oder Wasserfahrzeuge zu übertragen, die einen Reisebus-ähnlichen Innenaufbau aufweisen.

Der Luftkanal der Klimaanlage ist bevorzugt dachseitig im Fahrzeug angeordnet, jedoch sind auch andere Anordnungen möglich, wie z.B. am/im Boden, oder aber an/in den Seiten- oder Rückwänden des Fahrzeugs. Der besseren thermischen Wirkung wegen, wird aber eine Anordnung an der Decke des Fahrzeugs bevorzugt.

Stand der Technik ist, dass der deckenseitige Aufbau eines solchen Fahrzeuges aus einer Fahrzeugzelle besteht, an welche je ein Luftkanal pro Fahrzeugseite mit daran befindlicher Gepäckablage innenseitig angebaut wird und der Luftkanal als eigensteifes Gebilde mit einer sich insbesondere über die gesamte Fahrzeuglänge erstreckenden Längsabmessung ausgebildet ist.

Weiterhin ist es bekannt, die Wärme- und/oder Kälteerzeuger und deren sämtliche Wärmetauscher auf dem Dach und/oder im Heck- und/oder Frontbereich des Fahrzeugs anzuordnen, was mit dem wesentlichen Nachteil verbunden ist, dass damit der Schwerpunkt des Fahrzeugs unerwünscht verändert wird, was insbesondere bei Kleinbussen für den Einsatz in Großstädten oder Gebirgsregionen mit schmaler Spurbreite und geringer maximal zulässiger Höhe nachteilig ist.

Weiterer Nachteil ist, dass bei Wärme- und/oder Kälteerzeuger und/oder deren Wärmetauschern, die außen auf dem Chassis des Fahrzeugs angeordnet werden, deren Zu- und Ableitungen zum/vom Luftkanal und zum/vom Motorraum durch das Chassis selbst geführt werden müssen und damit ein erhöhter Montage-, Wartungs- und Reparaturaufwand in Kauf genommen werden muss. Zudem ist die Abdichtung dieser Durchbrüche durch das Chassis nicht ganz unproblematisch und erfordert höchste Präzision bei der Montage.

Die DE 31 33 501 A1 und die DE 73 08 783-U offenbaren schon eine Vorrichtung zum Belüften und Temperieren des Innenraumes eines Omnibusses nach dem Oberbegriff des Patentanspruches 1. Nachteil ist jedoch, dass die einzelnen Bauteile der Vorrichtung mühsam und zeitaufwändig einzeln oder nur in kleinen Baugruppen in den Omnibus gebracht werden und erst dort miteinander und am Omnibus montiert werden, was zu einem hohen Zeit- und Kostenaufwand führt.

Der Erfindung liegt deshalb die Aufgabe zugrunde, eine Klimaanlage in einem Land-, Wasser- oder Luftfahrzeug der eingangs genannten Art mit mindestens einem Wärme- und/oder Kälteerzeuger mit Wärmetauschern und mindestens einem Luftkanal derart weiterzubilden, dass die Klimaanlage wesentlich schneller und einfacher am Fahrzeug zu montieren ist und damit das Fahrzeug kostengünstiger herstellbar, zu warten und zu reparieren ist.

Zur Lösung der gestellten Aufgabe ist die Erfindung durch Merkmale des unabhängigen Patentanspruches 1 gekennzeichnet.

Vorteilhafte Ausgestaltungen der Erfindung sind in den abhängigen Ansprüchen beschrieben.

Wichtig ist, dass mindestens ein interner Wärmetauscher im Wesentlichen im Luftdurchtrittskanal des Luftkanals aufgenommen ist.

Vorteil hierbei ist, dass damit keine Chassis-Durchbrüche für die Zu- und Ableitungen des Wärmetauschers mehr von außen in das Fahrzeug eingebracht werden müssen, was zu wesentlichen Kostenvorteilen in Montage, Wartung und Reparatur der Klimaanlage und des Fahrzeugs führt. Weiterer Vorteil ist, dass durch Nutzen des ohnehin schon vorhandenen und grundsätzlich überdimensionierten Luftdurchtrittskanals des Luftkanals der Klimaanlage, das Fahrzeug kompakter in den Außenmaßen gestaltet werden kann und einen zentraleren Schwerpunkt erhält, was zu Kostenvorteilen in der Herstellung des Fahrzeugs führt, sowie zu einem verbesserten Fahrverhalten.

Die zu temperierende bzw. zu klimatisierende Luft wird durch eine Zwangskonvektion mittels mindestens eines Ventilators über den internen Wärmetauscher im Luftdurchtrittskanal des Luftkanals geleitet. Die Klimaanlage sieht mindestens einen Ventilator mit mindestens einem Ansaugstutzen und Ausblaskanal vor, wobei ein Ansaugstutzen zum Umwälzen der Umluft im Innenraum des Fahrzeugs dient, oder zum Ansaugen von Frischluft von außerhalb des Fahrzeugs und Einblasen in das Fahrzeug, oder aber für beide Strömungszwecke dient. Der mindestens eine Ausblaskanal dient zum Transport der angesaugten Luft (Umluft oder Frischluft) zum Wärmetauscher und über dessen Kühl-/Wärmerippen hinweg, welche durch die Medienleitungen temperiert (gekühlt oder erwärmt) werden, durch die das Temperiermedium (gasförmiges und/oder flüssiges Kühl- oder Wärmemedium) fließt, welches von der Temperierquelle (Wärmequelle oder Kältesenke) kommt.

Es kann lediglich ein einziger Ventilator pro Luftkanal vorhanden sein, oder aber auch mehrere kleinere um den Querschnitt des Luftdurchtrittskanals des Luftkanals nicht zu überschreiten und um einen optimierten Schwerpunkt des Fahrzeugs zu ermöglichen.

Dieser mindestens eine Ventilator ist dabei mindestens teilweise im Luftdurchtrittskanal des Luftkanals und/oder aber in mindestens einem einer Vielzahl von Gepäckfächern aufgenommen, je nach Dimensionen des Luftkanals, der Gepäckfächer, des Ventilators und des Wärmetauschers. Bevorzugt ist aber die möglichst vollständige Aufnahme von mehreren kleinen Ventilatoren in mindestens einem der Gepäckfächer vorgesehen, um den Luftdurchtrittskanal des Luftkanals nicht unnötig weiter zu verringern, da dort schon der mindestens eine Wärmetauscher den Querschnitt verengt und Wärmetauscher und Ventilatoren aus Gründen des thermischen Wirkungsgrades und aus Konstruktionsgründen in Querrichtung des Fahrzeugs parallel nebeneinander liegen.

In einer bevorzugten Ausführungsform ist in Längsrichtung des Fahrzeugs zwischen Fahrzugdecke und Fahrzeugseitenwand je ein Luftkanal mit daran befindlichen zahlreichen Gepäckstaufächern befestigt ist, wobei im Innenraum jedes Luftkanals etwa mittig zum Fahrzeug der interne Wärmetauscher und im Innenraum mindestens eines Gepäckstaufaches ein oder mehrere Ventilatoren aufgenommen sind.

Erfindungsgemäß ist der mindestens eine interne Wärmetauscher und der mindestens eine Ventilator mit dem Luftkanal fest verbunden, an dem sich Gepäckstaufächer befinden, und alle Bauteile bilden zusammen eine zusammenhängende Moduleinheit. Hierdurch kann diese Moduleinheit vollkommen fertig im Herstellerwerk der Moduleinheit vormontiert werden und beim Fahrzeughersteller als Ganzes in das Fahrzeug eingesetzt werden, so dass der Fahrzeughersteller nur noch die Kopplungen zum Luftkanal-externen Wärmetauscher z.B. im Motorraum herstellen muss, was nur wenig Zeit und Know-How benötigt und daher wesentliche Kosten einspart. Der interne Wärmetauscher und der mindestens eine Ventilator können aber noch zusätzlich direkt an der Fahrzeugdecke oder an der Fahrzeugseitenwand angebracht sein und dadurch den Luftkanal und dessen Aufhängung entlasten.

Bevorzugt wird, wenn der interne Wärmetauscher in der Art eines herkömmlichen Kühlschrankes ein wärmeaufnehmender Verdampfer oder ein wärmeabgebender Verflüssiger eines Kältemittels ist, so dass eine Kühlung oder eine Heizung damit realisiert werden kann. Auch ist eine Kombination davon möglich. In einer anderen Ausführung kann aber auch lediglich ein gasförmiges oder flüssiges Temperiermittel eingesetzt werden, das seinen Aggregatszustand nicht verändert. Auch können elektrische Heizsysteme zum Einsatz kommen.

Der Wärme- und/oder Kälteerzeuger enthält insbesondere einen Kompressor, der das gasförmige Kältemittel komprimiert und dem wärmeabgebenden Verflüssiger zuführt. Es kann aber auch vorgesehen sein, dass der Kompressor entfällt und die Klimaanlage in der Art eines Absorberkühlschrankes arbeitet, mit einem "Kocher" und einem "Absorber" im Kühl-/Heizkreislauf, anstatt des Kompressors.

Der Kompressor befindet sich zumeist im Motorraum des Fahrzeugs, in dem sich ein weiterer externer Wärmetauscher befindet, der mit dem internen Wärmetauscher im Luftkanal über Medienleitungen für das Temperiermittel zusammenwirkt. Der Kompressor und der externe Wärmetauscher können aber auch an einem anderen Ort des Fahrzeugs platziert werden, so z.B. unter dem Fahrzeugboden oder im Heckbereich des Fahrzeugs, wobei jedoch möglichst keine oder nur sehr wenige Durchbrüche durch das Chassis bzw. der Karosserie des Fahrzeugs für die Zu- und Ableitungen zwischen dem externen (außerhalb des Luftkanals) Wärmetauscher und internen (innerhalb des Luftkanals) Wärmetauscher erfolgen.

Bevorzugt ist der interne Wärmetauscher im Luftkanal ein wärmeaufnehmender Verdampfer eines Kältemittels und der externe Wärmetauscher im Motorraum ein wärmeabgebender Verflüssiger eines Kältemittels, wobei auch der umgekehrte Fall vorliegen kann oder aber beide Systeme parallel.

Wie an sich bekannt, sind der mindestens eine interne Wärmetauscher und der mindestens eine Ventilator mit Ansaugstutzen und Ausblaskanal in einem gemeinsamen Gehäuse gekapselt aufgenommen, so dass die Gefahr von Luftzirkulations-Kurzschlüssen ausgeschlossen wird, sowie eine Verletzungsgefahr von Wartungs- und Reparaturpersonen.

Im Folgenden wird die Erfindung anhand von lediglich einen Ausführungsweg darstellende Zeichnungen näher erläutert. Hierbei gehen aus den Zeichnungen und ihrer Beschreibung weitere wesentliche Merkmale und Vorteile der Erfindung hervor.

Es zeigen:

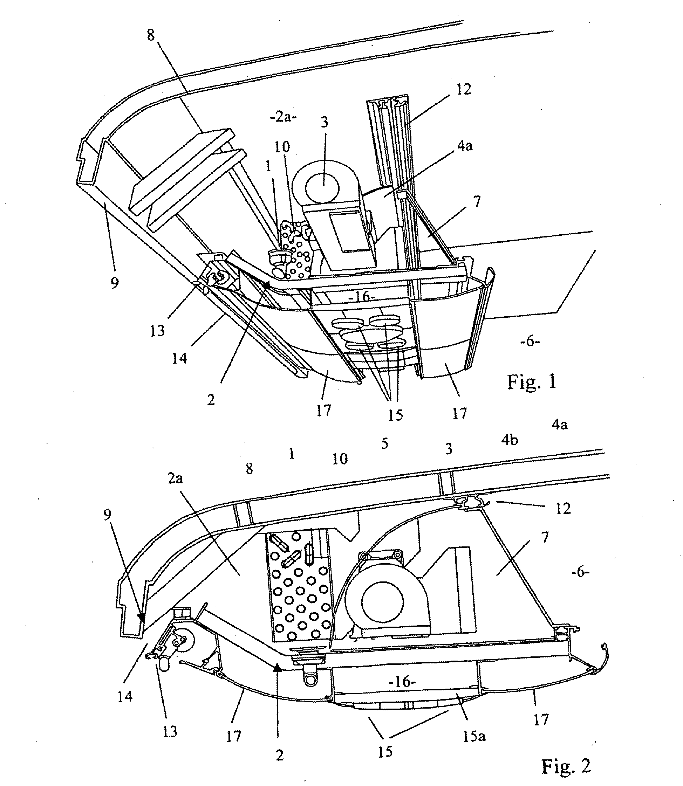

- Figur 1:: perspektivische Ansicht, von unten quer zur Fahrtrichtung, des Luftkanals und Gepäckabteil mit darin erfindungsgemäß eingebautem Verdampfer und Lüfter des Kühlaggregats der Klimaanlage;
- Figur 2:: schematisierter Querschnitt durch die Figur 1;
- Figur 3:: die gleiche Darstellung wie Figur 1 und 2 in perspektivischer Längsansicht;
- Figur 4:: die gleiche Darstellung wie Figur 1 mit Kapselung für den Verdampfer und Lüfter des Kühlaggregats der Klimaanlage.

In den Figuren ist in unterschiedlichen Darstellungsweisen ein im Bereich des Luftkanals 2 quer zur Fahrtrichtung aufgeschnittenes Fahrzeug teilweise gezeigt, wobei der Luftkanal 2 über Befestigungselemente 12, 13 sowohl mit der Fahrzeugdecke 8, als auch mit einer Fahrzeugseitenwand 9 verbunden ist. Der eigentliche Luftdurchtrittskanal 2a ist daher durch die Innenwände des Luftkanals 2 selbst, sowie eines daran angrenzenden Teils der Fahrzeugdecke 8 und eines daran angrenzenden Teils der Fahrzeugseitenwand 9 gebildet, wobei der Luftdurchtrittskanal 2a in der oberen Ecke der Fahrzeugdecke 8 zu beiden Seiten des Fahrzeugs gebildet ist.

Im Innenraum des Luftkanals 2, also im Luftdurchtrittskanal 2a ist erfindungsgemäß der interne (innerhalb Luftdurchtrittskanal 2a befindliche) Wärmetauscher 1 aufgenommen und dort am Luftkanal 2 und/oder an der Innenseite der Fahrzeugdecke 8 befestigt.

In diesem Beispiel sind vier Ventilatoren 3 über einen Luftansaugkanal 5 mit dem Wärmetauscher 1 in mechanischer und luftschlüssiger Verbindung, wobei die Ventilatoren 3 entweder Umluft aus dem Fahrzeuginnenraum 6 über den Umluftstutzen 4a, oder Frischluft von außerhalb des Fahrzeugs über den Frischluftstutzen 4b ansaugen und in den Fahrzeuginnenraum 6 über die Ausblasöffnungen des Gebläses und seitlich an der Fahrzeugseitenwand 9 befindliche Lüftungsschlitze 14 und/oder insbesondere einstellbare Lüftungsdüsen 15 direkt oberhalb der Sitze der Passagiere des Fahrzeugs einblasen.

Die über den Wärmetauscher 1 mittels der Medienleitungen 10 gekühlte oder auch angewärmte Luft gelangt aus dem Luftdurchtrittskanal 2a in einen Zwischenraum 16 unterhalb des Luftkanals 2 und anschließend zu den einstellbaren Lüftungsdüsen 15. Der Zwischenraum 16 ist zwischen abnehmbaren Abdeckplatten 17 sowie der Düsenhalteplatten 15a und dem Unterboden des Luftkanals 2 gebildet, wobei die Abdeckplatten 17 sowie die Düsenhalteplatten 15a am Luftkanal 2 befestigt sind.

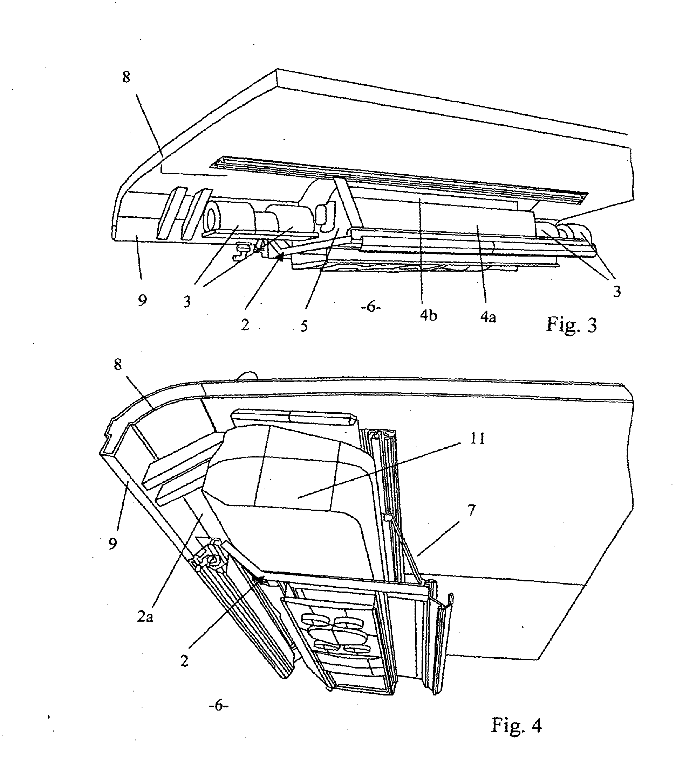

In Figur 4 ist noch dargestellt, dass der Wärmetauscher 1 zusammen mit dem Ventilator 3 und dessen Ansaugstutzen 4 und Ansaugstutzen 5 innerhalb eines gemeinsamen Gehäuses 11 untergebracht sind, aus dem die gekühlte/erwärmte Luft Richtung der Lüftungsschlitze 14 und der Lüftungsdüsen 15 strömt.

An der Innenseite des Luftkanals 2, in Richtung Fahrzeugmitte gelegen, sind zahlreiche aufklappbare Gepäckstaufächer 7 angeordnet, zur Aufnahme von Handgepäck der Passagiere. Innerhalb eines oder auch mehrerer dieser Gepäckstaufächer 7 sind nun die Ventilatoren 3 aufgenommen, welche über die Umluft-Ansaugstutzen 4a Umluft aus dem Fahrzeuginnenraum 6 über die Gepäckstaufächer 7 ansaugen können. Es verbleiben aber noch genügend freie Gepäckstaufächer 7 für das Handgepäck der Passagiere.

Wichtig ist auch, dass der Hauptteil der Klimaanlage etwa mittig und zu beiden Seiten im Fahrzeug und spiegelsymmetrisch sowohl zur Längsmittenachse, als auch zur Quermittenachse des Fahrzeugs angeordnet ist, was zu einem günstigen Schwerpunkt des Fahrzeugs führt und damit einem ausgezeichneten Fahrverhalten.

Gemäß Figur 3 sind in Fahrtrichtung gesehen links und rechts vom Wärmetauscher 1 je ein Ventilator 3 angeordnet, und quer zur Fahrtrichtung gesehen, vor dem Wärmetauscher 1, der Ansaugkanal 5 der Ventilatoren 3, so dass eine optimierte Gewichtsverteilung vorliegt.

Anstatt nur eines einzigen Wärmetauschers 1 auf jeder Fahrzeigseite können natürlich auch jeweils zwei oder auch mehrere Wärmetauscher 1 pro Fahrzeigseite und Luftkanal 2 vorgesehen sein. Auch können mehr als zwei Ventilatoren 3 pro Fahrzeigseite und Luftkanal 2 vorgesehen sein. Wichtig ist aber die spiegelsymmetrische Anordnung zur Längsachse als auch zur Querachse des Fahrzeugs.

Die Integration der akustischen und thermischen Isolierung im Gehäuse, und damit erhöhter Wirkungsgrad durch erhöhte Luftdichtigkeit und optimaler Dämmwert gegenüber konventionellen Gehäusen die Komponentenaufnahme erfolgt im Gehäuse ohne zusätzliche Befestigungselemente. Daraus resultiert eine servicefreundliche Handhabung im Reparaturfall. Durch den Einsatz eines Gehäuses in Leichtbauweise reduziert sich im Vergleich zu konventionellen Anlagen das Gesamtgewicht. Man erhält somit einen kostengünstigeren Spritverbrauch bzw. eine erhöhte Ladekapazität. Durch den etwa mittigen Einbau wird erreicht, dass durch die kurzen Luftwege der luftseitige Druckabfall minimiert wird und somit der luftseitige Wirkungsgrad erhöht wird.

### Zeichnungslegende

- 1.: interner Wärmetauscher
- 2.: Luftkanal; 2a Luftdurchtrittskanal
- 3.: Ventilator
- 4.: Ansaugstutzen von 3; 4a Umluft; 4b Frischluft
- 5.: Ausblaskanal von 3
- 6.: Fahrzeuginnenraum
- 7.: Gepäckstaufächer
- 8.: Fahrzeugdecke
- 9.: Fahrzeugseitenwand
- 10.: Medienleitungen des internen Wärmetauschers
- 11.: Gehäuse von 1 und 3
- 12.: Befestigungselemente für 7 an 8
- 13.: Befestigungselemente für 7 an 9
- 14.: Lüftungsschlitze
- 15.: Lüftungsdüsen; 15a Düsenhalteplatte
- 16.: Zwischenraum
- 17.: Abdeckplatten

## Patentansprüche

1. Klimaanlage für ein Land-, Wasser- oder Luftfahrzeug, welche mindestens einen Wärme- und/oder Kälteerzeuger aufweist, der über Wärmetauscher und mindestens einen Luftkanal (2) mit Luftdurchtrittskanal (2a) die Luft im Innenraum des Fahrzeugs klimatisiert/temperiert, wobei mindestens ein interner Wärmetauscher (1) im Wesentlichen im Luftdurchtrittskanal (2a) des Luftkanals (2) aufgenommen ist, und wobei die Klimaanlage mindestens einen Ventilator (3) mit Ansaugstutzen (4a, 4b) zum Umwälzen der Umluft im Innenraum (6) des Fahrzeugs und/oder zum Ansaugen von Frischluft von außerhalb des Fahrzeugs und Einblasen in das Fahrzeug aufweist und wobei der mindestens eine interne Wärmetauscher (1) und der mindestens eine Ventilator (3) mit dem Luftkanal (2) fest verbunden sind, an dem sich zahlreiche Gepäckstaufächer (7) befinden, **dadurch gekennzeichnet, dass** der mindestens eine interne Wärmetauscher (1), der Luftkanal (2), der mindestens eine Ventilator (3), und die zahlreichen Gepäckstaufächer (7) zusammen eine zusammenhängende Moduleinheit bilden, welche vollkommen fertig außerhalb des Fahrzeugs vormontierbar und als Ganzes in das Fahrzeug einsetzbar ist, so dass nur noch die Kopplungen zu einem Luftkanal-externen Wärmetauscher hergestellt werden müssen.

2. Klimaanlage nach Anspruch 1, **dadurch gekennzeichnet, dass** der mindestens eine Ventilator (3) mindestens teilweise im Luftdurchtrittskanal (2a) des Luftkanals (2) aufgenommen ist.

3. Klimaanlage nach Anspruch 1 oder 2, **dadurch gekennzeichnet, dass** im Innenraum mindestens eines der Gepäckstaufächer (7) der mindestens eine Ventilator (3) im Wesentlichen aufgenommen ist.

4. Klimaanlage nach Anspruch 3, **dadurch gekennzeichnet, dass** in Längsrichtung des Fahrzeugs zwischen Fahrzeugdecke (8) und Fahrzeugseitenwand (9) je ein Luftkanal (2) mit daran befindlichen zahlreichen Gepäckstaufächern (7) befestigt ist, wobei im Luftdurchtrittskanal (2a) jedes Luftkanals (2) etwa mittig zum Fahrzeug der interne Wärmetauscher (1) und im Innenraum mindestens eines Gepäckstaufaches (7) ein oder mehrere Ventilatoren (3) aufgenommen sind.

5. Klimaanlage nach einem der vorhergehenden Ansprüche, **dadurch gekennzeichnet, dass** der interne Wärmetauscher (1) in der Art eines herkömmlichen Kühlschrankes ein wärmeaufnehmender Verdampfer oder ein wärmeabgebender Verflüssiger eines Temperiermittels ist.

6. Klimaanlage nach Anspruch 5, **dadurch gekennzeichnet, dass** der Wärme- und/oder Kälteerzeuger einen Kompressor enthält, der das gasförmige Temperiermittel komprimiert und dem wärmeabgebenden Verflüssiger zuführt.

7. Klimaanlage nach Anspruch 6, **dadurch gekennzeichnet, dass** der Kompressor sich im Motorraum des Fahrzeugs befindet und sich dort ein weiterer externer Wärmetauscher befindet, der mit dem internen Wärmetauscher (1) im Luftkanal (2) über Medienleitungen (10) für das Temperiermittel zusammenwirkt.

8. Klimaanlage nach Anspruch 7, **dadurch gekennzeichnet, dass** der interne Wärmetauscher (1) im Luftkanal (2) ein wärmeaufnehmender Verdampfer eines Kältemittels ist und der externe Wärmetauscher im Motorraum ein wärmeabgebender Verflüssiger eines Kältemittels.

9. Klimaanlage nach einem der vorhergehenden Ansprüche, **dadurch gekennzeichnet, dass** der mindestens eine interne Wärmetauscher (1) und der mindestens eine Ventilator (3) mit Ansaugstutzen (4a, 4b) in einem gemeinsamen Gehäuse (11) gekapselt aufgenommen sind.

## Claims

1. Air conditioning system for a land vehicle, watercraft or aircraft, which has at least one heat and/or cold generator, which air conditions/controls the temperature of the air in the interior of the vehicle by means of heat exchangers and at least one air duct (2) with an air passage duct (2a), wherein at least one internal heat exchanger (1) is substantially received in the air passage duct (2a) of the air duct (2), and wherein the air conditioning system has at least one ventilator (3) with intake ports (4a, 4b) for circulating the recirculation air in the interior (6) of the vehicle and/or for sucking fresh air from outside the vehicle and blowing it into the vehicle and, wherein the at least one internal heat exchanger (1) and the at least one ventilator (3) are rigidly connected to the air duct (2), on which numerous luggage stowing compartments (7) are located, **characterised in that** the at least one internal heat exchanger (1), the air duct (2), the at least one ventilator (3), and the numerous luggage stowing compartments (7) together form a connected modular unit, which can be preassembled, completely finished, outside the vehicle and can be inserted as a whole into the vehicle, so only the couplings to a heat exchanger external to the air duct have to be produced.

2. Air conditioning system according to claim 1, **characterised in that** the at least one ventilator (3) is at least partially received in the air passage duct (2a) of the air duct (2).

3. Air conditioning system according to claim 1 or 2, **characterised in that** the at least one ventilator (3) is substantially received in the interior of at least one of the luggage stowing compartments (7).

4. Air conditioning system according to claim 3, **characterised in that** a respective air duct (2) with numerous luggage stowing compartments (7) located thereon is fastened in the longitudinal direction of the vehicle between the vehicle top (8) and vehicle side wall (9), the internal heat exchanger (1) being received in the air passage duct (2a) of each air duct (2) approximately centrally with respect to the vehicle and one or more ventilators (3) being received in the interior of at least one luggage stowing compartment (7).

5. Air conditioning system according to any one of the preceding claims, **characterised in that** the internal heat exchanger (1) is in the manner of a conventional refrigerator, a heat-absorbing evaporator or a heat-emitting condenser of a temperature-control means.

6. Air conditioning system according to claim 5, **characterised in that** the heat and/or cold generator contains a compressor, which compresses the gaseous temperature-control medium and supplies it to the heat-emitting condenser.

7. Air conditioning system according to claim 6, **characterised in that** the compressor is located in the engine compartment of the vehicle and a further external heat exchanger is located there, which cooperates with the internal heat exchanger (1) in the air duct (2) by means of media lines (10) for the temperature-control means.

8. Air conditioning system according to claim 7, **characterised in that** the internal heat exchanger (1) in the air duct (2) is a heat-absorbing evaporator of a refrigerant and the external heat exchanger in the engine compartment is a heat-emitting condenser of a refrigerant.

9. Air conditioning system according to any one of the preceding claims, **characterised in that** the at least one internal heat exchanger (1) and the at least one ventilator (3) with intake ports (4a, 4b) are received in an encapsulated manner in a common housing (11).

## Revendications

1. Installation de climatisation pour un véhicule terrestre, un bateau ou un aéronef, qui comporte au moins un générateur de chaleur et/ou un dispositif frigorifique qui conditionne/tempère l'air dans l'habitacle du véhicule par l'intermédiaire d'échangeurs de chaleur et d'au moins un conduit d'air (2) avec un conduit de passage d'air (2a), étant précisé qu'au moins un échangeur de chaleur interne (1) est logé globalement dans le conduit de passage d'air (2a) du conduit d'air (2), que l'installation de climatisation comporte au moins un ventilateur (3) avec des tubulures d'aspiration (4a, 4b) pour la circulation de l'air recyclé dans l'habitacle (6) du véhicule et/ou pour l'aspiration d'air frais à partir de l'extérieur du véhicule et l'injection dans le véhicule, et que ledit échangeur de chaleur interne (1) et ledit ventilateur (3) sont reliés solidement au conduit d'air (2) sur lequel se trouvent de nombreux compartiments à bagages (7), **caractérisée en ce que** ledit échangeur de chaleur interne (1), le conduit d'air (2), ledit ventilateur (3) et les nombreux compartiments à bagages (7) forment ensemble une unité modulaire d'un seul tenant qui est apte à être entièrement prémontée à l'extérieur du véhicule et qui est apte à être installée comme un tout dans le véhicule, de sorte qu'il n'y a plus qu'à réaliser les raccordements avec un échangeur de chaleur extérieur au conduit d'air.

2. Installation de climatisation selon la revendication 1, **caractérisée en ce que** ledit ventilateur (3) est logé au moins en partie dans le conduit de passage d'air (2a) du conduit d'air (2).

3. Installation de climatisation selon la revendication 1 ou 2, **caractérisée en ce que** ledit ventilateur (3) est logé globalement dans l'espace intérieur de l'un au moins des compartiments à bagages (7).

4. Installation de climatisation selon la revendication 3, **caractérisée en ce qu'**un conduit d'air (2) sur lequel se trouvent de nombreux compartiments à bagages (7) est fixé entre le plafond (8) du véhicule et chaque paroi latérale (9) du véhicule, dans le sens longitudinal du véhicule, l'échangeur de chaleur interne (1) étant logé dans le conduit de passage d'air (2a) de chaque conduit d'air (2) à peu près au milieu du véhicule, et un ou plusieurs ventilateurs (3) étant logés dans l'espace intérieur d'au moins un compartiment à bagages (7).

5. Installation de climatisation selon l'une des revendications précédentes, **caractérisée en ce que** l'échangeur de chaleur interne (1) est constitué, à la manière d'un réfrigérateur classique, par un évaporateur à absorption de chaleur ou par un condenseur exothermique d'agent d'équilibrage de température.

6. Installation de climatisation selon la revendication 5, **caractérisée en ce que** le générateur de chaleur et/ou le dispositif frigorifique contiennent un compresseur qui comprime l'agent d'équilibrage de température gazeux et l'amène dans le condenseur exothermique.

7. Installation de climatisation selon la revendication 6, **caractérisée en ce que** le compresseur se trouve dans l'espace moteur du véhicule et il est prévu dans celui-ci un autre échangeur de chaleur externe qui coopère avec l'échangeur de chaleur interne (1) prévu dans le conduit d'air (2), par l'intermédiaire de conduites (10) pour l'agent d'équilibrage de température.

8. Installation de climatisation selon la revendication 7, **caractérisée en ce que** l'échangeur de chaleur (1) prévu dans le conduit d'air (2) est constitué par un évaporateur à absorption de chaleur d'un réfrigérant et l'échangeur de chaleur externe prévu dans l'espace moteur est constitué par un condenseur exothermique d'un réfrigérant.

9. Installation de climatisation selon l'une des revendications précédentes, **caractérisée en ce que** ledit échangeur de chaleur interne (1) et ledit ventilateur (3) avec les tubulures d'aspiration (4a, 4b) sont logés dans un carter commun (11) en étant enfermés.
